# EUROPEAN PATENT APPLICATION

(11) **EP 4 759 435 A1**
(43) Date of publication of application: **17.06.2026**
(21) Application number: 25803856.1
(22) Date of filing: 20.01.2025
(51) Int. Cl.: B05C 5/02, B05C 11/10, H01M 4/88, G05B 19/418

(54) **PROCESS MANAGEMENT APPARATUS AND OPERATION METHOD THEREOF**

(30) Priority: 13.05.2024 KR 20240062294
(71) Applicant: LG Energy Solution, Ltd., Seoul 07335 (KR)
(72) Inventor: PARK, Sang Jun, Daejeon 34122 (KR); KIM, Jin Ho, Daejeon 34122 (KR)
(74) Representative: BCKIP Part mbB
(86) International application number: PCT/KR2025/001056
(87) International publication number: WO 2025/239498

(57) **Abstract**

According to an embodiment disclosed in this document, a process management device may include a coating valve that regulates supply of slurry to a coating die, a circulation valve that regulates circulation of the slurry, a circulation pump that forms the circulation of the slurry, and a controller that controls at least one of the coating valve, the circulation valve, and the circulation pump based on a first signal related to whether coating of an electrode current collector is in progress and a second signal related to whether the coating die is open.

## Description

### TECHNICAL FIELD

### Cross-reference to Related Applications

This application claims priority from Korean Patent Application No. 10-2024-0062294, filed on May 13, 2024, the disclosures of which are incorporated by reference herein.

### Technical Field

Embodiments disclosed in this document relate to a process management device and operating method thereof.

### BACKGROUND ART

Recently, research and development on secondary batteries have been actively conducted. Here, secondary batteries are batteries that can be charged and discharged, and can be interpreted as encompassing both conventional Ni/Cd batteries, Ni/MH batteries, and recent lithium ion batteries. Among secondary batteries, lithium ion batteries can have higher energy density than conventional Ni/Cd batteries, Ni/MH batteries, etc., and can be manufactured to be small and lightweight, and thus the secondary batteries can have high usability as a power source for mobile devices. Recently, the scope of use of the lithium ion batteries has expanded to include a power source for electric vehicles, and the lithium ion batteries are attracting attention as a next-generation energy storage medium.

A manufacturing process of secondary batteries may include a positive/negative electrode manufacturing process, and the positive/negative electrode of the secondary battery may be formed by applying a slurry containing an active material, a conductive material, a binder, etc. to an electrode sheet and then drying the slurry.

The main quality items of the secondary battery cathode/negative electrode may include an item of whether or not an electrode surface is defective. When application is stopped due to attachment of an adhesive tape for electrode connection, etc., precipitation and coagulation of the slurry may occur as a flow rate and/or pressure of the slurry weakens, which causes electrode surface defects.

### DISCLOSURE OF THE INVENTION

### TECHNICAL PROBLEM

An objective of the embodiments disclosed in this document is to provide a process management device and operating method thereof for preventing precipitation and coagulation of a slurry for application to an electrode.

An objective of the embodiments disclosed in this document is to provide a process management device and operating method thereof for efficiently and stably managing electrode quality.

The technical problems of the embodiments disclosed in this document are not limited to the technical problems mentioned above, and other technical problems not mentioned will be clearly understood by those skilled in the art to which the present invention belongs from the description below.

### TECHNICAL SOLUTION

A process management device according to an embodiment disclosed in this document may include a coating valve that regulates supply of slurry to a coating die, a circulation valve that regulates circulation of the slurry, a circulation pump that forms the circulation of the slurry, and a controller that controls at least one of the coating valve, the circulation valve, and the circulation pump based on a first signal related to whether coating of an electrode current collector is in progress and a second signal related to whether the coating die is open.

In the process management device according to an embodiment disclosed in this document, the controller may increase a rotation speed of the circulation pump, raise a position of the circulation valve, and lower a position of the coating valve when the first signal is a coating stop signal of the electrode current collector and the second signal is an opening signal of the coating die.

The process management device according to an embodiment disclosed in this document may further include a pressure sensor that acquires pressure information of the circulation valve, and the controller may control an opening rate of the circulation valve based on the pressure information from the pressure sensor.

In the process management device according to an embodiment disclosed in this document, the controller may reduce the opening rate of the circulation valve when the pressure information is less than reference pressure information.

In the process management device according to an embodiment disclosed in this document, the controller may lower the position of the coating valve when the pressure information of the circulation valve whose opening rate is reduced is less than the reference pressure information.

In the process management device according to an embodiment disclosed in this document, the controller may increase the opening rate of the circulation valve when the pressure information is greater than or equal to reference pressure information.

In the process management device according to an embodiment disclosed in this document, the controller may raise the position of the coating valve when the pressure information of the circulation valve whose opening rate is increased is greater than or equal to the reference pressure information.

In the process management device according to an embodiment disclosed in this document, the controller may reduce the rotation speed of the circulation pump, lower the position of the circulation valve, and raise the position of the coating valve when the second signal is changed to a closing signal of the coating die.

The process management device according to an embodiment disclosed in this document may further include a signal control unit that controls the first signal and the second signal.

In the process management device according to an embodiment disclosed in this document, the signal control unit may detect whether a tape for coating is attached to the electrode current collector and control the first signal.

An operating method of a process management device according to an embodiment disclosed in this document may include acquiring a first signal related to whether coating of an electrode current collector is in progress and a second signal related to whether a coating die is open and controlling at least one of a coating valve that regulates supply of slurry to a coating die, a circulation valve that regulates circulation of the slurry, and a circulation pump that forms the circulation of the slurry based on the first signal and the second signal.

In the operating method of the process management device according to an embodiment disclosed in this document, in the controlling of at least one of the coating valve, the circulation valve, and the circulation pump, the controller may increase a rotation speed of the circulation pump, raise a position of the circulation valve, and lower a position of the coating valve when the first signal is a coating stop signal of the electrode current collector and the second signal is an opening signal of the coating die.

In the operating method of the process management device according to an embodiment disclosed in this document, in the controlling of at least one of the coating valve, the circulation valve, and the circulation pump, an opening rate of the circulation valve may be controlled based on pressure information of the circulation valve.

In the operating method of the process management device according to an embodiment disclosed in this document, in the controlling of at least one of the coating valve, the circulation valve, and the circulation pump, the rotation speed of the circulation pump may be reduced, the position of the circulation valve may be lowered, and the position of the coating valve may be raised when the second signal is changed to a closing signal of the coating die.

### ADVANTAGEOUS EFFECTS

The process management device and the operating method thereof according to the embodiments disclosed in this document can prevent precipitation and coagulation of the slurry for application to the electrode.

The process management device and the operating method thereof according to the embodiments disclosed in this document can efficiently and stably manage electrode quality.

The process management device and the operating method thereof according to the embodiments disclosed in this document can automatically perform opening and closing of a coating die depending on whether coating is stopped.

In addition, various effects directly or indirectly identified through this document may be provided.

### BRIEF DESCRIPTION OF THE DRAWINGS

FIG. 1 is a diagram for describing a coating process of a battery electrode.
FIG. 2 is a diagram illustrating an example of a configuration of a process management device according to an embodiment disclosed in this document.
FIG. 3 is a flowchart for describing an operating method of the process management device according to an embodiment disclosed in this document.

### MODE FOR CARRYING OUT THE INVENTION

Hereinafter, embodiments described of the present invention are described with reference to the accompanying drawings. However, this is not intended to limit the present invention to a specific embodiment, but should be understood to include various modifications, equivalents, and/or alternatives of the embodiments of the present invention.

In this document, the singular form of a noun corresponding to an item may include one or more of said items, unless the context clearly indicates otherwise. In this document, each of phrases "A or B", "at least one of A and B", "at least one of A or B", "A, B, or C", "at least one of A, B, and C", and "at least one of A, B, or C" may include any one of the items listed together in that phrase, or all possible combinations thereof. Terms such as "first", "second", "firstly", or "secondly", may be used merely to distinguish one component from another, and do not limit the components in any other respect (e.g., importance or order). When a component (e.g., a first component) is referred to as being "coupled" or "connected" to another component (e.g., a second component), with or without the terms "functionally" or "communicatively", it means that the component can be connected to the other component directly (e.g., wired or wirelessly), or indirectly (e.g., through a third component).

According to the embodiments disclosed in this document, each of the components (e.g., modules or programs) described in this document may include a single or plurality of entities. According to various embodiments, one or more of the components or operations may be omitted, or one or more other components or operations may be added. Alternatively or additionally, a plurality of components (e.g., modules or programs) may be integrated into a single component. In such a case, the integrated component may perform one or more functions of each of the plurality of components identically or similarly to those performed by the corresponding component among the plurality of components prior to the integration. According to various embodiments, the operations performed by a module, program, or other component may be performed sequentially, in parallel, repeatedly, or heuristically, or one or more of the operations may be performed in a different order, omitted, or performed by being added with one or more other operations.

The term "module" or "...unit" used in this document may include a unit implemented in hardware, software or firmware, and may be used interchangeably with terms such as a logic, a logic block, a component, or a circuit. The module may be a component that is integrally configured, or a minimum unit of the component that performs one or more functions, or a portion thereof. For example, according to one embodiment, the module may be implemented in the form of an application-specific integrated circuit (ASIC).

Various embodiments of this document may be implemented as software (e.g., a program or an application) including one or more instructions stored in a storage medium (e.g., a memory) that can be read by a machine. For example, a processor of the machine may call at least one instruction among the one or more instructions stored from the storage medium and execute the at least one instruction. This enables the machine to be operated to perform at least one function according to the at least one instruction called. The one or more instructions may include code generated by a compiler or code that can be executed by an interpreter. The machine-readable storage medium may be provided in the form of a non-transitory storage medium. Here, the term "non-transitory" means that the storage medium is a tangible device and does not contain a signal (e.g., electromagnetic waves), and this term does not distinguish between cases where data is stored semi-permanently and cases where data is stored temporarily in the storage medium.

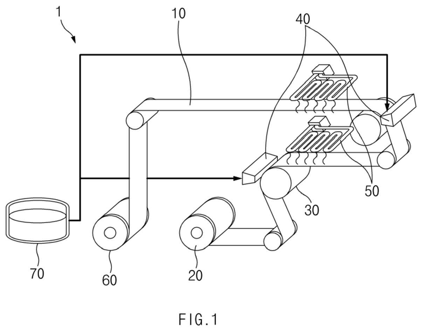

FIG. 1 is a diagram for describing a coating process of a battery electrode.

Referring to FIG. 1, the battery electrode may be manufactured through the coating process on an electrode current collector 10 of a coating device 1. The coating device 1 may include an unwinder 20, a travelling roller 30, a coating die 40, a dryer 50, a rewinder 60, and a supply tank 70.

A manufacturing process of the battery electrode includes a process of forming an electrode active material layer on then electrode current collector 10, and the coating device 1 may be utilized to form the active material layer of the electrode current collector 10. A process of forming the electrode active material layer includes applying an electrode active material in a slurry state to the electrode current collector 10, and forming the electrode active material layer on the electrode current collector 10 by drying the electrode active material in a slurry state applied to the electrode current collector 10 and removing a solvent present in the electrode active material in a slurry state.

More specifically, the electrode current collector 10 having a roll shape may be travelled along a travelling path, and during a travel process, the electrode current collector 10 on which the active material layer is formed (i.e., coating is completed) through a process of applying slurry and a process of drying the applied slurry can be wound again in a roll shape.

First, the unwinder 20 may unwind the electrode current collector 10 having a roll shape. The electrode current collector 10 unwound from the unwinder 20 may be travelled along a travelling path by the travelling roller 30. That is, the travelling roller 30 may make the electrode current collector 10 unwound from the unwinder 20 travel. The travelling roller 30 may make the electrode current collector 10 travel in order to continuously supply the electrode current collector 10 having a thin roll shape in a predetermined process direction.

The travelling roller 30 may preferably have a cylindrical shape to be advantageous for making the electrode current collector 10 travel, but is not necessarily limited thereto. A plurality of such travelling rollers 30 may be formed to make the electrode current collector 10 travel.

The coating die 40 may apply slurry to at least one surface of the electrode current collector 10. For example, the coating die 40 may be disposed so as to face one surface of the electrode current collector 10 travelled by the travelling roller 30, and may apply an electrode active material in a slurry state to the electrode current collector 10. The coating die 40 may include a coating pattern shim so that the electrode active material in a slurry state may be discharged according to a coating pattern. The electrode active material in a slurry state may be discharged to the electrode current collector 10 through the coating pattern shim, so that the coating process may proceed. In this case, a coating area may be marked on the electrode current collector 10 at specific intervals in advance so as to facilitate coating.

The coating die 40 may be installed so as to face a surface to be coated of the electrode current collector 10, and the electrode current collector 10 may be continuously moved along a process direction by the travelling roller 30. Therefore, when the electrode current collector 10 moves, the electrode active material discharged from the coating die 40 may be coated on the coating surface of the electrode current collector 10.

A plurality of coating dies 40 may be provided. For example, a plurality of coating dies 40 may be installed so as to face each surface in order to coat both surfaces of the electrode current collector 10. As an example, the coating die 40 may include a top coating die for coating an upper surface of the electrode current collector 10 and a back coating die for coating a back surface of the electrode current collector 10. The top coating die and the back coating die may be installed in one area of the travelling path of the electrode current collector 10, and as exemplarily illustrated in FIG. 1, the top coating die and the back coating die may be installed in different areas so that top coating and back coating may be sequentially performed.

The dryer 50 may form the electrode active material layer on the electrode current collector 10 by drying the electrode active material in a slurry state applied to the electrode current collector 10 and removing the solvent present in the electrode active material in a slurry state. A plurality of dryers 50 may be provided, and when a plurality of coating dies 40 are provided as described above and a plurality of coatings are performed, drying by the dryer 50 may be performed sequentially each time each coating is performed.

The dryer 50 may be composed of a plurality of drying zones. The plurality of drying zones may be sequentially positioned along the travelling path of the electrode current collector 10, and the solvent present in the slurry-state electrode active material may be vaporized and removed as the electrode current collector 10 to which the slurry is applied may be sequentially passed through the plurality of drying zones of the dryer 50.

The rewinder 60 may rewind the electrode current collector 10 on which the coating is completed.

The supply tank 70 may store the slurry. The slurry stored in the supply tank 70 may be supplied to the coating die 40, and the slurry may be discharged by the coating die 40 and applied to the electrode current collector 10.

In this way, the electrode active material layer may be formed on the electrode current collector 10 through a series of processes.

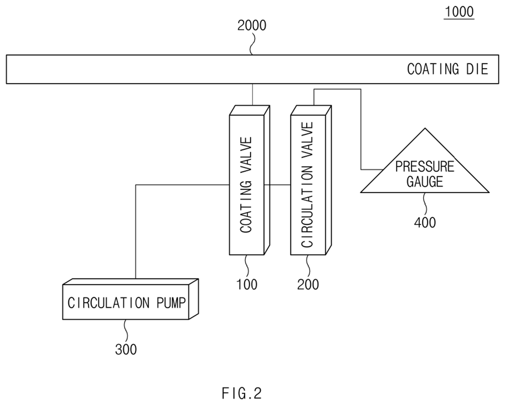

FIG. 2 is a diagram illustrating an example of a configuration of a process management device according to an embodiment disclosed in this document.

Referring to FIG. 2, a process management device 1000 may include a coating valve 100, a circulation valve 200, a circulation pump 300, and a controller (not illustrated). However, the present invention is not limited to this, and some configurations may be omitted from the process management device 1000 or other general-purpose configurations may be further included in the process management device 1000.

The controller according to an embodiment disclosed in this document may have a structure for executing instructions that implement operations of the process management device 1000. The controller may be implemented as an array of a plurality of logic gates for processing various computations or as a general-purpose microprocessor, and may be configured with a single processor or a plurality of processors. For example, the controller may be implemented in the form of at least one of a microprocessor, a CPU, a GPU, and an AP.

The controller may operate with a memory configured to store various data, instructions, mobile applications, computer programs, etc. The memory may be configured separately from the controller or integrally with the controller. The controller may process various computations by executing the instructions stored in the memory. For example, the memory may be implemented as a non-volatile device such as ROM, PROM, EPROM, EEPROM, flash memory, PRAM, MRAM, RRAM, FRAM, etc., or a volatile device such as DRAM, SRAM, SDRAM, PRAM, etc., and may be implemented in the form of HDD, SSD, SD, Micro-SD, etc., or a combination thereof.

According to an embodiment, the coating valve 100 may control the supply of slurry to the coating die 2000 for applying the slurry to the electrode current collector. In addition, the circulation valve 200 may control the circulation of the slurry. In addition, the circulation pump 300 may form the circulation of the slurry. In addition, the controller may control at least one of the coating valve 100, the circulation valve 200, and the circulation pump 300 based on a first signal related to whether coating of the electrode collector is in progress and a second signal related to whether the coating die 2000 is opened. For reference, at least some of the coating valve 100 and the circulation valve 200 may be opened in three directions simultaneously.

According to an embodiment, the process management device 1000 may further include a signal control unit (not illustrated) that controls the first signal and the second signal.

According to an embodiment, the signal control unit may detect whether a tape for coating is attached to the electrode current collector and control the first signal. For example, when the signal control unit detects that a tape for coating is attached to the electrode current collector, the signal control unit may control the first signal so that the first signal becomes a coating stop signal for the electrode current collector. As another example, when the signal control unit detects that the tape for coating is not attached to the electrode current collector, the signal control unit may control the first signal so that the first signal becomes a coating progress signal for the electrode current collector.

According to an embodiment, the signal control unit may detect whether coating is stopped and control the second signal. For example, when the signal control unit detects that coating is stopped, the signal control unit may control the second signal so that the second signal becomes an opening signal for the coating die. As another example, when the signal control unit detects that coating is not stopped, the signal control unit may control the second signal so that the second signal becomes a closing signal for the coating die.

According to an embodiment, when the first signal is the coating stop signal of the electrode current collector and the second signal is the opening signal of the coating die 2000, the controller may increase a rotation speed of the circulation pump 300, raise a position of the circulation valve 200, and lower a position of the coating valve 100.

Through this, the pressure inside the circulation valve 200 and/or the coating valve 100 increases, and precipitation/coagulation of the slurry may be prevented, and the generated slurry aggregates may be removed.

According to an embodiment, the process management device 1000 may further include a pressure sensor (pressure gauge; 400) that acquires pressure information of the circulation valve 200.

According to an embodiment, when the first signal is the coating stop signal of the electrode collector and the second signal is the opening signal of the coating die 2000, the controller may increase the rotation speed of the circulation pump 300, raise the position of the circulation valve 200, lower the position of the coating valve 100, and then control an opening rate of the circulation valve 200 based on pressure information from the pressure sensor 400.

According to an embodiment, when the pressure information of the circulation valve 200 is less than reference pressure information, the controller may reduce the opening rate of the circulation valve 200 to increase the pressure of the circulation valve 200. For example, when the pressure information of the circulation valve 200 is less than the reference pressure information, the controller may reduce the opening rate of the circulation valve 200 within an effective opening rate range corresponding to the circulation valve 200.

According to an embodiment, when the pressure information of the circulation valve 200 is less than the reference pressure information even though the opening rate of the circulation valve 200 has been reduced, the controller may lower the position of the coating valve 100 to increase the pressure of the circulation valve 200.

For example, when the pressure information of the circulation valve 200 whose opening rate is reduced is less than the reference pressure information, the controller may lower the position of the coating valve 100 within the effective position range. For example, the controller may lower the position of the coating valve 100 to the minimum position range within the effective position range. In this case, the controller may additionally increase the rotation speed of the circulation pump 300.

According to an embodiment, when the pressure information of the circulation valve 200 is greater than or equal to the reference pressure information, the controller may increase the opening rate of the circulation valve 200 to reduce the pressure of the circulation valve 200. For example, when the pressure information of the circulation valve 200 is greater than or equal to the reference pressure information, the controller may increase the opening rate of the circulation valve 200 within the effective opening rate range corresponding to the circulation valve 200.

According to an embodiment, when the pressure information of the circulation valve 200 is greater than or equal to the reference pressure information even though the opening rate of the circulation valve 200 is increased, the controller may (i) raise the position of the coating valve 100, (ii) lower the position of the circulation valve 200, or (iii) increase the opening rate of an opening valve (not illustrated) corresponding to a pipe connected to the coating valve 100 and the circulation valve 200 in order to reduce the pressure of the circulation valve 200.

For example, when the pressure information of the circulation valve 200 whose opening rate is increased is higher than the reference pressure information, the controller may raise the position of the coating valve 100 within an effective position range. For example, the controller may (i) raise the position of the coating valve 100 to the maximum position range within the effective position range, (ii) lower the position of the circulation valve 200, or (iii) increase the opening rate of the opening valve (not illustrated) corresponding to the pipe connected to the coating valve 100 and the circulation valve 200. In this case, the controller may additionally reduce the rotation speed of the circulation pump 300.

According to an embodiment, when the second signal is changed to the closing signal of the coating die 2000, the controller may reduce the rotation speed of the circulation pump 300, lower the position of the circulation valve 200, and raise the position of the coating valve 100. For example, when the second signal is changed to a closing signal of the coating die 2000, the controller may restore the rotation speed of the circulation pump 300 to the rotation speed before the coating die 2000 was opened, and restore the positions of the circulation valve 200 and the coating valve 100 to the positions before the coating die 2000 was opened.

For reference, the number of coating dies 2000 described above is not limited to a single number. For example, when the coating die 2000 includes a first coating die (e.g., a top coating die) and a second coating die (e.g., a back coating die), the operation of controlling the coating valve 100, the circulation valve 200, and the circulation pump 300 described above may be performed first for a specific coating die (e.g., a top coating die) and then may be sequentially performed for the remaining coating dies (e.g., a back coating die).

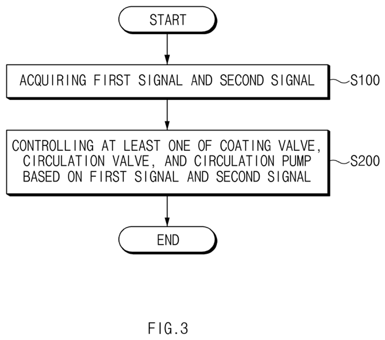

FIG. 3 is a flowchart for describing an operating method of the process management device 1000 according to an embodiment disclosed in this document.

Referring to FIG. 3, the operating method of the process management device 1000 may include a step S100 of acquiring a first signal related to whether coating of the electrode current collector is in progress, and a second signal related to whether the coating die 2000 for applying slurry to the electrode current collector is opened, and a step S200 of controlling at least one of the coating valve 100 for controlling the supply of slurry to the coating die 2000, the circulation valve 200 for controlling the circulation of slurry, and the circulation pump 300 for forming the circulation of slurry, based on the first signal and the second signal.

In step S200, when the first signal is a coating stop signal of the electrode collector and the second signal is an opening signal of the coating die 2000, the process management device 1000 may increase the rotation speed of the circulation pump 300, raise the position of the circulation valve 200, and lower the position of the coating valve 100. In the embodiment, when the second signal is changed to a closing signal of the coating die 2000, the process management device 1000 may decrease the rotation speed of the circulation pump 300, lower the position of the circulation valve 200, and raise the position of the coating valve 100. In the embodiment, the process management device 1000 may control the opening rate of the circulation valve 200 based on the pressure information of the circulation valve 200. In the embodiment, when the pressure information of the circulation valve 200 is less than the reference pressure information, the process management device 1000 may reduce the opening rate of the circulation valve 200. In the embodiment, when the pressure information of the circulation valve 200 whose opening rate is reduced is still less than the reference pressure information, the process management device 1000 may lower the position of the coating valve 100. In the embodiment, when the pressure information of the circulation valve 200 is greater than or equal to the reference pressure information, the process management device 1000 may increase the opening rate of the circulation valve 200. In the embodiment, when the pressure information of the circulation valve 200 whose opening rate is increased is still greater than or equal to the reference pressure information, the process management device 1000 may raise the position of the coating valve 100.

In the above, even though all the components constituting the embodiment disclosed in this document have been described as being combined or operating in combination as one, the embodiments disclosed in this document are not necessarily limited to this embodiment. That is, within the scope of the purpose of the embodiments disclosed in this document, all of the components may selectively operate in combination with one or more.

In addition, the terms "include," "configure," or "have" described above, unless specifically stated to the contrary, mean that the corresponding component may be included, and therefore should be interpreted as further including other components rather than excluding other components. All terms including technical or scientific terms have the same meaning as commonly understood by a person skilled in the art to which the embodiments disclosed in this document belong, unless otherwise defined. Terms commonly used, such as terms defined in the dictionary, should be interpreted as being consistent with the contextual meaning of the relevant technology, and should not be interpreted in an idealized or overly formal sense unless clearly defined in this document.

The above description is merely an illustrative description of the technical idea disclosed in this document, and a person skilled in the art to which the embodiments disclosed in this document belong may make various modifications and variations thereto without departing from the essential characteristics of the embodiments disclosed in this document. Therefore, the embodiments disclosed in this document are not intended to limit the technical idea of the embodiments disclosed in this document, but rather to explain it, and the scope of the technical idea disclosed in this document is not limited by these embodiments. The scope of protection of the technical idea disclosed in this document should be interpreted by the claims below, and all technical ideas within the equivalent scope should be interpreted as being included in the scope of the rights of this document.

## Claims

1. A process management device comprising:
a coating valve that regulates supply of slurry to a coating die;
a circulation valve that regulates circulation of the slurry;
a circulation pump that forms the circulation of the slurry; and
a controller that controls at least one of the coating valve, the circulation valve, and the circulation pump based on a first signal related to whether coating of an electrode current collector is in progress and a second signal related to whether the coating die is open.

2. The process management device of claim 1, wherein the controller
increases a rotation speed of the circulation pump,
raises a position of the circulation valve, and
lowers a position of the coating valve when the first signal is a coating stop signal of the electrode current collector and the second signal is an opening signal of the coating die.

3. The process management device of claim 2, further comprising:
a pressure sensor that acquires pressure information of the circulation valve,
wherein the controller controls an opening rate of the circulation valve based on the pressure information from the pressure sensor.

4. The process management device of claim 3, wherein the controller reduces the opening rate of the circulation valve when the pressure information is less than reference pressure information.

5. The process management device of claim 4, wherein the controller lowers the position of the coating valve when the pressure information of the circulation valve whose opening rate is reduced is less than the reference pressure information.

6. The process management device of claim 3, wherein the controller increases the opening rate of the circulation valve when the pressure information is greater than or equal to reference pressure information.

7. The process management device of claim 6, wherein the controller raises the position of the coating valve when the pressure information of the circulation valve whose opening rate is increased is greater than or equal to the reference pressure information.

8. The process management device of claim 2, wherein the controller reduces the rotation speed of the circulation pump, lowers the position of the circulation valve, and raises the position of the coating valve when the second signal is changed to a closing signal of the coating die.

9. The process management device of claim 1, further comprising:
a signal control unit that controls the first signal and the second signal.

10. The process management device of claim 9, wherein the signal control unit detects whether a tape for coating is attached to the electrode current collector and control the first signal.

11. An operating method of a process management device degassing process device, the operating method comprising:
acquiring a first signal related to whether coating of an electrode current collector is in progress and a second signal related to whether a coating die is open; and
controlling at least one of a coating valve that regulates supply of slurry to a coating die, a circulation valve that regulates circulation of the slurry, and a circulation pump that forms the circulation of the slurry based on the first signal and the second signal.

12. The operating method of claim 11, wherein in the controlling of at least one of the coating valve, the circulation valve, and the circulation pump, the controller increases a rotation speed of the circulation pump, raises a position of the circulation valve, and lowers a position of the coating valve when the first signal is a coating stop signal of the electrode current collector and the second signal is an opening signal of the coating die.

13. The operating method of claim 12, wherein, in the controlling of at least one of the coating valve, the circulation valve, and the circulation pump, an opening rate of the circulation valve is controlled based on pressure information of the circulation valve.

14. The operating method of claim 12, wherein, in the controlling of at least one of the coating valve, the circulation valve, and the circulation pump, the rotation speed of the circulation pump is reduced, the position of the circulation valve is lowered, and the position of the coating valve is raised when the second signal is changed to a closing signal of the coating die.
